# EUROPÄISCHE PATENTSCHRIFT

(11) **EP 2 496 429 B1**
(45) Veröffentlichungstag und Bekanntmachung des Hinweises auf die Patenterteilung: **07.09.2016**
(21) Anmeldenummer: 10771394.3
(22) Anmeldetag: 13.10.2010
(51) Int. Cl.: B60K 6/48, B60K 6/387, F16H 3/72

(54) **HYBRIDFAHRZEUGGETRIEBE**
HYBRID VEHICLE TRANSMISSION
BOÎTE DE VITESSES DE VÉHICULE HYBRIDE

(30) Priorität: 04.11.2009 DE 102009046366
(43) Veröffentlichungstag der Anmeldung: 12.09.2012
(73) Patentinhaber: ZF Friedrichshafen AG, 88046 Friedrichshafen (DE)
(72) Erfinder: HANKER, Gert, 88074 Meckenbeuren (DE); ILLERHAUS, Dietmar, 88138 Hergensweiler (DE); REICHERT, Heinz, 88677 Markdorf (DE); VOGEL, Martin, 88090 Immenstaad (DE)
(86) Internationale Anmeldenummer: PCT/EP2010/065303
(87) Internationale Veröffentlichungsnummer: WO 2011/054637

(56) Entgegenhaltungen:
- WO-A1-2007/009582
- DE-A1- 10 152 472
- DE-A1-102006 028 602
- DE-A1-102007 047 802
- JP-A- 2003 019 911

## Beschreibung

Die Erfindung betrifft ein Hybridfahrzeuggetriebe gemäß der im Oberbegriff des Patentanspruches 1 näher definierten Art.

Ein Hybridfahrzeuggetriebe mit den Merkmalen des Oberbegriffs des Anspruchs 1 ist aus der JP 2003 019911 A bekannt.

Aus der Praxis bekannte Hybridfahrzeuggetriebe weisen in Abhängigkeit eines Fahrzeuggewichtes, einer Fahrzeugbeladung, eines Anhängerbetriebes, einer gewünschten Steigfähigkeit eines mit einem Hybridfahrzeuggetriebe ausgeführten Fahrzeuges, einem rein elektrischen Überfahren einer Bordsteinkante und dergleichen verschiedene konstruktive Konfigurationen auf. So werden beispielsweise in Fahrzeugen mit höherem Fahrzeuggewicht jeweils eine elektrische Maschine eines Hybridfahrzeuggetriebes bzw. dessen Rotor über ein Planetengetriebe mit einer Konstantübersetzung von etwa 1,7 mit der Getriebeeingangswelle verbunden. Für Fahrzeuge mit geringerem Fahrzeuggewicht wird die elektrische Maschine bzw. deren Rotor jeweils direkt mit der Getriebeeingangswelle mit einer Übersetzung gleich 1 gekoppelt.

Zusätzliche und oftmals als Brennkraftmaschine ausgeführte Antriebsmaschinen von Hybridantriebssträngen sind jeweils über ein Schaltelement mit der Getriebeeingangswelle verbindbar, wobei bei den vorbeschriebenen Hybridfahrzeuggetrieben nachteilhafterweise jeweils nur der gesamte Antrieb von der Getriebeeingangswelle trennbar ist, weshalb ein alleiniger verbrennungsmotorseitiger Antrieb nicht durchführbar ist.

Des Weiteren ist aufgrund der mit der Konstantübersetzung ausgeführten Hybridfahrzeuggetriebevariante ein im Bereich der elektrischen Maschine elektrisch erzeugtes Anfahrmoment im Bereich der Getriebeeingangswelle nicht auf dem Niveau eines Anfahrmomentes zur Verfügung stellbar, welches mit einem konventionellen Getriebe bei verbrennungsmotorischem Antrieb darstellbar ist.

Dies führt dazu, dass in Abhängigkeit eines Belastungszustandes des Fahrzeuges, einer aktuell zu durchfahrenden Steigung, einer Bordsteinkante oder dergleichen, eine so genannte Notanfahrt eines Fahrzeuges mit zugeschalteter Brennkraftmaschine erforderlich ist, obwohl eine der elektrischen Maschine zugeordnete elektrische Speichereinrichtung einen ausreichenden Beladungszustand aufweist. Solche Notanfahrten sind jedoch unerwünscht, da diese einen Kraftstoffverbrauch eines Hybridfahrzeuges in unerwünschtem Umfang erhöhen.

Zusätzlich ist ein Rotor einer elektrischen Maschine bei den vorbeschriebenen Hybridfahrzeuggetriebevarianten nicht von der Getriebeeingangswelle abkoppelbar, womit während Überlandfahrten, während welchen ein der elektrischen Maschine zugeordnetes elektrisches Speichermedium voll beladen ist und während denen ein Fahrzeug im Wesentlichen alleine durch den Verbrennungsmotor angetrieben wird, die Rotormasse der elektrischen Maschine permanent mitzubewegen bzw. zu beschleunigen ist, wodurch ebenfalls wiederum ein Kraftstoffverbrauch erhöht wird.

Zudem ist eine Höchstgeschwindigkeit eines mit einem vorbeschriebenen Hybridfahrzeuggetriebe aufgeführten Fahrzeuges aufgrund einer zulässigen Höchstdrehzahl der elektrischen Maschine begrenzt. Dies resultiert aus der Tatsache, dass die zulässige Maximaldrehzahl einer gebräuchlichen elektrischen Maschine bei ca. 4.500 Umdrehungen je Minute liegt. Der Rotor der elektrischen Maschine wird jedoch bei einer Verbrennungsmotordrehzahl von 2.800 Umdrehungen je Minute, die im Wesentlichen der Drehzahl der Getriebeeingangswelle entspricht, und einer Konstantübersetzung von 1,7 zwischen der Getriebeeingangswelle und dem Rotor mit einer Drehzahl von 4.760 Umdrehungen je Minute angetrieben, womit die zulässige Maximaldrehzahl einer gebräuchlichen elektrischen Maschine überschritten wird.

Der vorliegenden Erfindung liegt daher die Aufgabe zugrunde, ein Hybridfahrzeuggetriebe zur Verfügung zu stellen, mittels welchem ein Hybridfahrzeug mit möglichst geringem Kraftstoffverbrauch betreibbar ist und mit dem unzulässige Drehzahlen im Bereich einer elektrischen Maschine auf konstruktiv einfache Art und Weise vermeidbar sind.

Erfindungsgemäß wird diese Aufgabe mit einem Hybridfahrzeuggetriebe mit den Merkmalen der Ansprüche 1, 5 oder 8 gelöst.

Das erfindungsgemäße Hybridfahrzeuggetriebe ist mit einer Getriebeeingangswelle ausgebildet, die über ein Schaltelement mit einer Antriebsmaschine verbindbar ist. Des Weiteren weist das Hybridfahrzeuggetriebe eine elektrische Maschine auf, die zur Drehmomentübertragung mit der Getriebeeingangswelle in Wirkverbindung bringbar ist.

Erfindungsgemäß ist ein weiteres Schaltelement vorgesehen, mittels dem die elektrische Maschine von der Getriebeeingangswelle trennbar und mit dieser in Wirkverbindung bringbar ist.

Somit besteht auf einfache Art und Weise die Möglichkeit, die elektrische Maschine während einer Überlandfahrt von der Getriebeeingangswelle abzukoppeln und ein Fahrzeug während eines rein verbrennungsmotorischen Antriebes mit möglichst geringem Kraftstoffverbrauch zu betreiben.

Zusätzlich ist im Bereich zwischen der elektrischen Maschine und der Getriebeeingangswelle aufgrund der schaltbaren Wirkverbindung zwischen der Getriebeeingangswelle und der elektrischen Maschine eine entsprechend hohe Übersetzung vorsehbar, mit welcher eine Notanfahrt über eine als Verbrennungsmaschine ausgebildete zusätzliche Antriebsmaschine nur bei unzureichendem Ladezustand einer der elektrischen Maschine zugeordneten elektrischen Speichereinheit vorzusehen ist, womit eine Belastung im Bereich des die Getriebeeingangswelle mit der Antriebsmaschine verbindenden Schaltelementes herabgesetzt ist und ein Kraftstoffverbrauch des Fahrzeuges ebenfalls reduzierbar ist.

Des Weiteren besteht durch die im Bereich des weiteren Schaltelementes vorgesehene Abkopplung der elektrischen Maschine von der Getriebeeingangswelle die Möglichkeit eine Fahrzeughöchstgeschwindigkeit auf konstruktiv einfache Art und Weise unabhängig von der zulässigen Höchstdrehzahl einer elektrischen Maschine einstellen zu können, womit ein Hybridfahrzeug mit derselben Geschwindigkeit wie ein konventionelles Fahrzeug, welches ohne Hybridantrieb ausgebildet ist, betreibbar ist.

Der erfindungsgemäße Aufbau des Hybridfahrzeuggetriebes bietet zudem die Möglichkeit, vielfältige Fahrzeuganwendungsmöglichkeiten, wie Lieferfahrzeuge, Busse und dergleichen, mit nur einer Hybridgetriebevariante auszustatten.

Weitere Vorteile und vorteilhafte Ausführungsformen des erfindungsgemäßen Hybridfahrzeuggetriebes ergeben sich aus den Patentansprüchen und den nachfolgend anhand der Zeichnung beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Sowohl die in den Unteransprüchen angegebenen Merkmale als auch die in den nachfolgenden Ausführungsbeispielen des erfindungsgemäßen Hybridfahrzeuggetriebes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Es zeigt:
- Fig. 1: eine stark schematisierte Darstellung eines Hybridfahrzeugantriebsstranges;
- Fig. 2: eine vereinfachte Teildarstellung eines Getriebeeingangsbereiches eines ersten nicht beanspruchten Beispiels eines Hybridfahrzeuggetriebes des Hybridfahrzeugantriebsstranges gemäß Fig. 1;
- Fig. 3: eine Fig. 2 entsprechende Darstellung eines zweiten Ausführungsbeispieles des Hybridfahrzeuggetriebes des Hybridfahrzeugantriebsstranges gemäß Fig. 1;
- Fig. 4: eine Fig. 2 entsprechende Darstellung eines dritten Ausführungsbeispieles des Hybridfahrzeuggetriebes des Hybridfahrzeugantriebsstranges gemäß Fig. 1;
- Fig. 5: eine Fig. 2 entsprechende Darstellung eines vierten Ausführungsbeispieles des Hybridfahrzeuggetriebes des Hybridfahrzeugantriebsstranges gemäß Fig. 1; und
- Fig. 6: eine Fig. 2 entsprechende Darstellung eines fünften Ausführungsbeispieles des Hybridfahrzeuggetriebes des Hybridfahrzeugantriebsstranges gemäß Fig. 1.

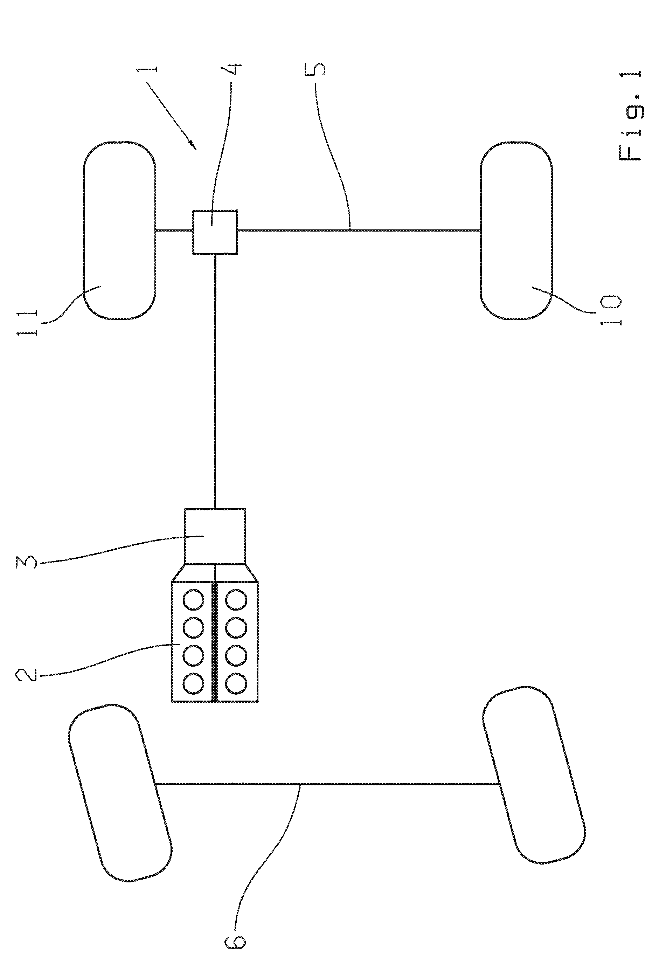

In Fig. 1 ist ein Hybridfahrzeugantriebsstrang 1 mit einer Antriebsmaschine 2, mit einem Hybridfahrzeuggetriebe 3, mittels welchem verschiedene Übersetzungen für Vorwärts- und Rückwärtsfahrt darstellbar sind, mit einer Differentialgetriebeeinheit 4 und mit zwei Fahrzeugachsen 5, 6 dargestellt, wobei die Fahrzeugachse 5 vorliegend die Fahrzeughinterachse und die Fahrzeugachse 6 die Fahrzeugvorderachse ist.

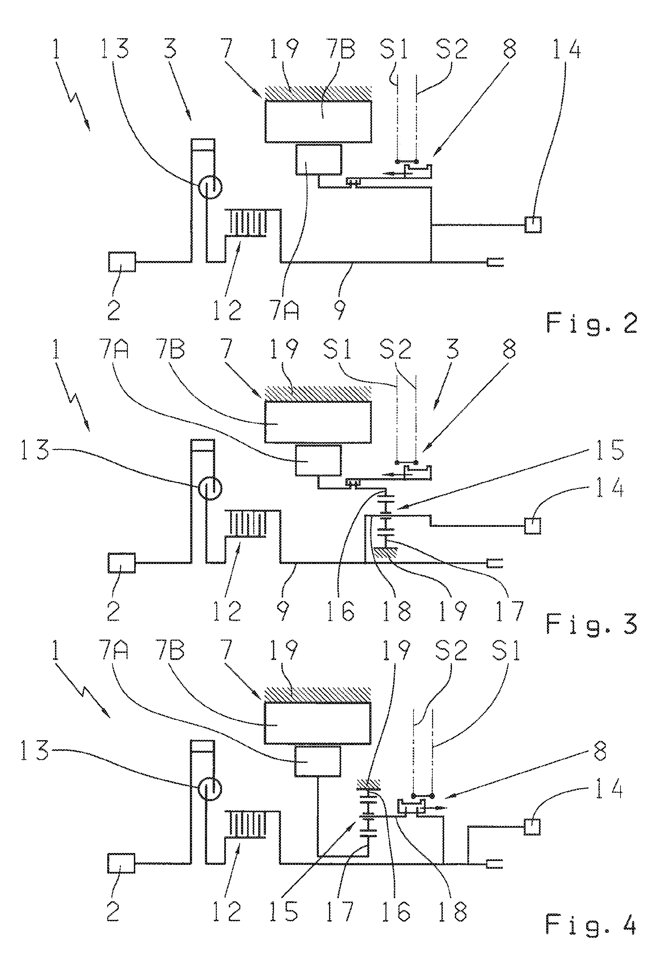

Das Hybridfahrzeuggetriebe 3 umfasst eine in Fig. 2 bis Fig. 6 jeweils näher dargestellte elektrische Maschine 7, die über ein formschlüssiges Schaltelement 8 mit einer Getriebeeingangswelle 9 in der später beschriebenen Art und Weise in Wirkverbindung bringbar ist. Das formschlüssige Schaltelement 8 ist in Abhängigkeit des jeweils vorliegenden Anwendungsfalles auch als reibschlüssiges Lamellenschaltelement oder als Synchronisierung ausführbar.

Des Weiteren umfasst das Hybridfahrzeuggetriebe 3 einen Getriebebereich, über welchen die verschiedenen Übersetzungen für Vorwärts- und Rückwärtsfahrt darstellbar sind. Dieser Getriebebereich ist an sich in beliebiger Art und Weise ausführbar, um die in Abhängigkeit des jeweils vorliegenden Betriebszustandes des Hybridfahrzeugantriebsstranges 1 jeweils angeforderte Übersetzung darstellen zu können.

Die Antriebsmaschine 2 ist bei dem in Fig. 1 dargestellten Ausführungsbeispiel des Hybridfahrzeugantriebsstranges 1 als Brennkraftmaschine ausgeführt und kann bei einer vorteilhaften Weiterbildung auch als elektrische Maschine ausgeführt sein. Die Differenzialgetriebeeinheit 4 ist zwischen dem Hybridfahrzeuggetriebe 3 und der Fahrzeugachse 5 angeordnet, die bekannterweise auf jeder Fahrzeugseite mit wenigstens einem Antriebsrad 10, 11 verbunden ist.

Zusätzlich ist die Antriebsmaschine 2 über ein vorliegend reibschlüssig ausgebildetes Schaltelement 12 mit der Getriebeeingangswelle 9 koppelbar, um ein von der Antriebsmaschine 2 erzeugtes Drehmoment in das Hybridfahrzeuggetriebe 3 und in Richtung der Fahrzeugachse 5 weiterleiten zu können. In Abhängigkeit eines Betriebszustandes der Antriebsmaschine 2, der elektrischen Maschine 7 und der Schaltelemente 8 und 12 ist der Hybridfahrzeugantriebsstrang 1 in verschiedenen Zuständen betreibbar.

So besteht beispielsweise bei geöffnetem Schaltelement 12, zu dem die Antriebsmaschine 2 vom restlichen Hybridfahrzeugantriebsstrang 1 getrennt ist, die Möglichkeit ein mit dem Hybridfahrzeugantriebsstrang 1 ausgebildetes Fahrzeug rein elektromotorisch anzutreiben, wenn die elektrische Maschine 7 über das vorliegend formschlüssig ausgebildete Schaltelement 8 mit der Getriebeeingangswelle 9 gekoppelt ist.

Darüber hinaus ist bei geöffnetem Schaltelement 12 und während eines Schubbetriebes des Hybridfahrzeugantriebsstranges Bremsenergie im Bereich der dann generatorisch betriebenen elektrischen Maschine 7 bei geschlossenem formschlüssigen Schaltelement 8 rekuperierbar, wobei der Rekuperationsbetrieb selbstverständlich auch bei geschlossenem reibschlüssigem Schaltelement 12 durchführbar ist.

In geschlossenem Betriebszustand des reibschlüssigen Schaltelementes 12 und bei gleichzeitig geöffnetem Betriebszustand des formschlüssigen Schaltelementes 8 ist ein mit dem Hybridfahrzeugantriebsstrang 1 ausgebildetes Fahrzeug rein über die Antriebsmaschine 2 bzw. rein verbrennungsmotorisch antreibbar. Ein so genannter Boostbetrieb des Hybridfahrzeugstranges 1 ist in geschlossenem Betriebszustand der beiden Schaltelemente 8 und 12 darstellbar, während dem der Fahrzeugachse 5 sowohl ein Antriebsmoment der Antriebsmaschine 2 als auch der elektrischen Maschine 7 zuführbar ist.

Zwischen der Antriebsmaschine 2 und dem reibschlüssigen Schaltelement 12 ist vorliegend ein Schwingungsdämpfer 13 vorgesehen, mittels welchem aus Drehungleichförmigkeiten der Antriebsmaschine 2 resultierende Schwingungen gedämpft in das Hybridfahrzeuggetriebe 3 und somit in den restlichen Bereich des Hybridfahrzeugantriebsstranges 1 eingeleitet werden.

Das formschlüssige Schaltelement 8 ist vorliegend zwischen zwei Schaltstellungen S1 und S2 umschaltbar. Die elektrische Maschine 7 ist in der ersten Schaltstellung S1 des formschlüssigen Schaltelementes 8 von der Getriebeeingangswelle 9 getrennt und in der zweiten Schaltstellung S2 mit der Getriebeeingangswelle 9 gekoppelt.

Zusätzlich ist im Bereich der Wirkverbindung zwischen der elektrischen Maschine 7 und der Getriebeeingangswelle 9 eine Getriebepumpe 14 mit der Getriebeeingangswelle 9 wirkverbunden, womit die Getriebepumpe 14 sowohl von der Antriebsmaschine 9 als auch von der elektrischen Maschine 7 antreibbar ist. Damit ist auf einfache Art und Weise gewährleistet, dass mit Hydraulikfluid zu versorgende Baugruppen des Hybridfahrzeuggetriebes jeweils mit einem für die Funktionsweise des Hybridfahrzeuggetriebes erforderlichen Hydraulikdruck beaufschlagbar bzw. versorgbar sind.

Die in Fig. 3 bis Fig. 6 dargestellten weiteren Ausführungsbeispiele des Hybridfahrzeuggetriebes 1 unterscheiden sich von dem in Fig. 2 gezeigten Beispiel lediglich in Teilbereichen, weshalb in der nachfolgenden Beschreibung im Wesentlichen lediglich auf die Unterschiede eingegangen wird und bezüglich der weiteren Funktionsweise des Hybridfahrzeuggetriebes auf die vorstehende Beschreibung zu Fig. 2 verwiesen wird.

Bei dem in Fig. 3 dargestellten Ausführungsbeispiel des Hybridfahrzeuggetriebes 3 ist im Bereich der über das formschlüssige Schaltelement 8 schaltbaren Wirkverbindung zwischen der elektrischen Maschine 7 und der Getriebeeingangswelle 9 eine Planetengetriebeeinrichtung 15 vorgesehen. Ein Rotor 7A der elektrischen Maschine 7 ist in der zweiten Schaltstellung S2 des Schaltelementes 8 mit einem Hohlrad 16 der Planetengetriebeeinrichtung 15 drehfest verbunden und in der ersten Schaltstellung S1 des formschlüssigen Schaltelementes 8 von dem Hohlrad 16 getrennt. Ein Stator 7B der elektrischen Maschine 7 ist in gleichem Umfang wie ein Sonnenrad 17 der Planetengetriebeeinrichtung 15 gehäuseseitig festgelegt.

Die Getriebeeingangswelle 9 ist vorliegend drehfest mit einem Planetenträger 18 der Planetengetriebeeinrichtung 15 verbunden, womit ein Drehmoment der elektrischen Maschine 7 in der zweiten Schaltstellung S2 des formschlüssigen Schaltelementes 8 mit einer Übersetzung von beispielsweise 1,7 übersetzt wird. In Abhängigkeit des jeweils vorliegenden Anwendungsfalles besteht jedoch auch die Möglichkeit, dass eine Übersetzung der Planetengetriebeeinrichtung 15 größer oder kleiner als 1,7 ist.

Bei dem in Fig. 4 dargestellten Ausführungsbeispiel des Hybridfahrzeuggetriebes 3 ist das Hohlrad 16 der Planetengetriebeeinrichtung 15 gehäuseseitig festgelegt und der Planetenträger 18 steht in der zweiten Schaltstellung S2 des formschlüssigen Schaltelementes 8 mit der Getriebeeingangswelle 9 in Wirkverbindung, während der Rotor 7A drehfest mit dem Sonnenrad 17 der Planetengetriebeeinrichtung 15 verbunden ist.

Aufgrund der letztbeschriebenen Ankopplung des Rotors 7A an die Planetengetriebeeinrichtung 15 wird ein von der elektrischen Maschine 7 zur Verfügung gestelltes Drehmoment vorliegend bei geschlossenem formschlüssigen Schaltelement 8 mit einer Übersetzung von beispielsweise 2,7 in die Getriebeeingangswelle eingeleitet. In der ersten Schaltstellung S1 des formschlüssigen Schaltelementes 8 ist der Rotor 7A der elektrischen Maschine 7 von der Getriebeeingangswelle 9 getrennt.

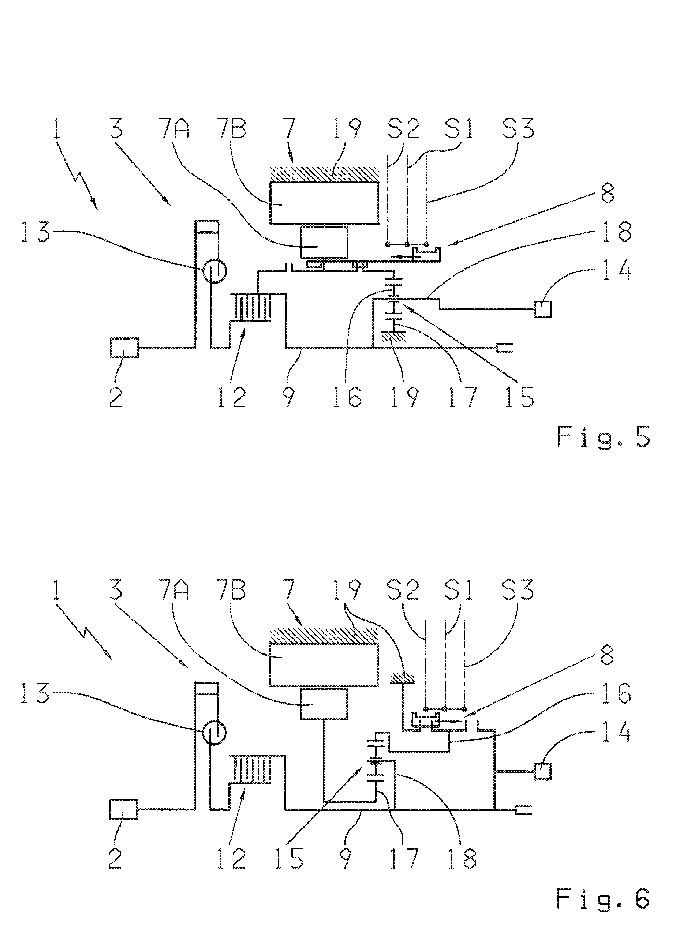

Fig. 5 zeigt ein viertes Ausführungsbeispiel des Hybridfahrzeuggetriebes 3 in einer Fig. 2 entsprechenden Darstellung, bei welchem das formschlüssige Schaltelement 8 in drei verschiedene Schaltstellungen S1, S2 und S3 verstellbar ist. In der ersten Schaltstellung S1 ist der Rotor 7A der elektrischen Maschine 7 von der Getriebeeingangswelle 9 und vom Hohlrad 16 der Planetengetriebeeinrichtung 15 entkoppelt, womit ein Drehmoment der elektrischen Maschine 7 nicht in die Getriebeeingangswelle 9 und somit den restlichen Hybridfahrzeugantriebsstrang 1 einleitbar ist. In der zweiten Schaltstellung S2 des formschlüssigen Schaltelementes 8 ist der Rotor 7A der elektrischen Maschine 7 mit der Getriebeeingangswelle 9 direkt verbunden, während der Rotor 7A vom Hohlrad 16 der Planetengetriebeeinrichtung 15 getrennt ist. Somit wird in der zweiten Schaltstellung S2 ein Drehmoment der elektrischen Maschine 7 mit der Übersetzung 1 in die Getriebeeingangswelle 9 eingeleitet.

In der dritten Schaltstellung S3 des formschlüssigen Schaltelementes 8 ist die elektrische Maschine 7 im Bereich des Rotors 7A mit dem Hohlrad 16 der Planetengetriebeeinrichtung 15 drehfest verbunden und die direkte Verbindung zwischen dem Rotor 7A und der Getriebeeingangswelle 9 getrennt. Die Getriebeeingangswelle 9 ist wiederum mit dem Planetenträger 18 der Planetengetriebeeinrichtung 15 drehfest verbunden und das Sonnenrad 17 ist wiederum gehäuseseitig festgelegt, womit ein Drehmoment der elektrischen Maschine 7 in der dritten Schaltstellung S3 des formschlüssigen Schaltelementes 8 mit einer Übersetzung von beispielsweise 1,7 in die Getriebeeingangswelle 9 eingeleitet wird.

Bei dem in Fig. 6 dargestellten fünften Ausführungsbeispiel des Hybridfahrzeuggetriebes 3 ist das formschlüssige Schaltelement 8 wiederum in drei unterschiedliche Schaltstellungen S1 bis S3 verstellbar. Die elektrische Maschine 7 ist im Bereich des Rotors 7A drehfest mit dem Sonnenrad 17 der Planetengetriebeeinrichtung 15 verbunden. Die Getriebeeingangswelle 9 ist wiederum mit dem Planetenträger 18 gekoppelt. Das Hohlrad 16 der Planetengetriebeeinrichtung 15 ist in der ersten Schaltstellung S1 des formschlüssigen Schaltelementes 8 sowohl von einem Gehäuse 19 des Hybridfahrzeuggetriebes 3 als auch von der Getriebeeingangswelle 9 entkoppelt.

In der zweiten Schaltstellung S2 des formschlüssigen Schaltelementes 8 ist das Hohlrad 16 gehäuseseitig festgelegt und ein Drehmoment der elektrischen Maschine 7 wird vorliegend mit einer Übersetzung von beispielsweise 2,7 in die Getriebeeingangswelle 9 eingeleitet. Wird das formschlüssige Schaltelement 8 in seine dritte Schaltstellung S3 überführt, ist das Hohlrad 16 drehfest mit der Getriebeeingangswelle 9 verbunden und die Planetengetriebeeinrichtung 15 liegt in verblocktem Betriebszustand vor. Somit wird in der dritten Schaltstellung S3 des formschlüssigen Schaltelementes 8 ein Drehmoment der elektrischen Maschine 7 mit der Übersetzung 1 bzw. direkt in die Getriebeeingangswelle 9 eingeleitet.

Sowohl bei der vierten Ausführungsform des Hybridfahrzeuggetriebes 3 als auch bei der fünften Ausführungsform des Hybridfahrzeuggetriebes 3 ist der Hybridfahrzeugantriebsstrang 1 im Bereich des Getriebeeingangs des Hybridfahrzeuggetriebes mit jeweils unterschiedlichen Übersetzungsstufen im Bereich zwischen der elektrischen Maschine 7 und der Getriebeeingangswelle 9 betreibbar, womit die elektrische Maschine in Abhängigkeit der jeweils vorliegenden Fahrsituation in ihrem optimalen Betriebspunkt betreibbar ist. Darüber hinaus ist die elektrische Maschine 7 auch von der Getriebeeingangswelle 9 abkoppelbar, womit ein Kraftstoffverbrauch eines mit dem Hybridfahrzeugantriebsstrang 1 ausgebildeten Fahrzeuges betriebszustandsabhängig auf einfache Art und Weise reduzierbar ist.

Bei der in Fig. 6 dargestellten fünften Ausführungsform des Hybridfahrzeuggetriebes 3 ist die elektrische Maschine 7 gemeinsam mit der gesamten Planetengetriebeeinrichtung 15 über das formschlüssige Schaltelement 8 von der Getriebeeingangswelle 9 entkoppelbar, womit insbesondere während einer Überlandfahrt im Bereich der Planetengetriebeeinrichtung 15 und der elektrischen Maschine 7 geringere Bauteilbeanspruchungen vorliegen, eine niedrigere Geräuschentwicklung im Bereich der Zahneingriffe der Planetengetriebeeinrichtung 15 verursacht wird und aufgrund der reduzierten Schleppmomente auch ein Kraftstoffverbrauch eines mit dem Hybridfahrzeugantriebsstrang 1 ausgebildeten Fahrzeuges reduziert wird.

Grundsätzlich ist das formschlüssige Schaltelement 8 bei allen in der Zeichnung dargestellten Ausführungsbeispielen des Hybridfahrzeuggetriebes 3 durch einen entsprechenden Betrieb der elektrischen Maschine 7 für lastfreie Umschaltungen zwischen den Schaltstellungen S1, S2 bzw. S1 bis S3 synchronisierbar und über einen elektrischen oder hydraulischen Aktuator, beispielsweise über eine Schaltgabel, betätigbar.

So besteht beispielsweise bei einer Abkopplung des Rotors 7A der elektrischen Maschine 7 von der Getriebeeingangswelle 9 die Möglichkeit, das Antriebsmoment der elektrischen Maschine 7 kurzzeitig zu reduzieren und über den Aktuator eine Schaltmuffe des formschlüssigen Schaltelementes 8 mit geringer Schaltkraft zu verschieben, womit der Rotor 7A von der Getriebeeingangswelle 9 oder dem Hohlrad 16 der Planetengetriebeeinrichtung 15 getrennt wird.

Beim Herstellen der Wirkverbindung zwischen dem Rotor 7A der elektrischen Maschine 7 und der Getriebeeingangswelle 9 bzw. dem Hohlrad 16 der Planetengetriebeeinrichtung 15 wird über einen entsprechenden Betrieb der elektrischen Maschine 7 die mit der elektrischen Maschine 7 verbundene Schaltelementhälfte des formschlüssigen Schaltelementes 8 auf die Drehzahl der Getriebeeingangswelle 9 eingestellt, womit das Schaltelement 8 mit geringen Schaltkräften in die jeweils angeforderte Schaltstellung überführbar ist.

Bezugszeichen
- 1: Hybridfahrzeugantriebsstrang
- 2: Antriebsmaschine
- 3: Hybridfahrzeuggetriebe
- 4: Differenzialgetriebeeinheit
- 5,6: Fahrzeugachse
- 7: elektrische Maschine
- 7A: Rotor
- 7B: Stator
- 8: formschlüssiges Schaltelement
- 9: Getriebeeingangswelle
- 10, 11: Antriebsrad
- 12: reibschlüssiges Schaltelement
- 13: Schwingungsdämpfer
- 14: Getriebepumpe
- 15: Planetengetriebeeinrichtung
- 16: Hohlrad
- 17: Sonnenrad
- 18: Planetenträger
- 19: Getriebegehäuse
- S1 bis S3: Schaltstellung des formschlüssigen Schaltelementes

## Patentansprüche

1. Hybridfahrzeuggetriebe (3) mit einer Getriebeeingangswelle (9), die über ein Schaltelement (12) mit einer Antriebsmaschine (2) verbindbar ist, und mit einer elektrischen Maschine (7), die zur Drehmomentübertragung mit der Getriebeeingangswelle (9) in Wirkverbindung bringbar ist, wobei ein weiteres Schaltelement (8) vorgesehen ist, mittels dem die elektrische Maschine (7) von der Getriebeeingangswelle (9) trennbar und mit dieser in Wirkverbindung bringbar ist, wobei die elektrische Maschine (7) in einer ersten Schaltstellung (S1) des weiteren Schaltelementes (8) von der Getriebeeingangswelle (9) getrennt ist und in einer zweiten Schaltstellung (S2) des weiteren Schaltelementes (8) mit der Getriebeeingangswelle (9) gekoppelt ist, im Bereich der schaltbaren Wirkverbindung zwischen der elektrischen Maschine (7) und der Getriebeeingangswelle (9) eine Planetengetriebeeinrichtung (15) vorgesehen ist, **dadurch gekennzeichnet, dass** die Planetengetriebeeinrichtung (15) über das weitere Schaltelement (8), über welches die Wirkverbindung zwischen der Getriebeeingangswelle (9) und der elektrischen Maschine (7) schaltbar ist, verblockbar ist.

2. Hybridfahrzeuggetriebe nach Anspruch 1, **dadurch gekennzeichnet, dass** die Planetengetriebeeinrichtung (15) in der zweiten Schaltstellung (S2) des weiteren Schaltelementes (8) in unverblocktem Betriebszustand vorliegt.

3. Hybridfahrzeuggetriebe nach Anspruch 1 oder 2, **dadurch gekennzeichnet, dass** die elektrische Maschine (7) in einer dritten Schaltstellung (S3) des weiteren Schaltelementes (8) mit der Getriebeeingangswelle (9) wirkverbunden ist und die Planetengetriebeeinrichtung (15) in verblocktem Betriebszustand vorliegt.

4. Hybridfahrzeuggetriebe nach einem der Ansprüche 1 bis 3, **dadurch gekennzeichnet, dass** ein Hohlrad (16) der Planetengetriebeeinrichtung (15) über das weitere Schaltelement (8) gehäusefest darstellbar oder mit der Getriebeeingangswelle (9) koppelbar ist, während ein Planetenträger (18) mit der Getriebeeingangswelle (9) wirkverbunden ist und ein Sonnenrad (17) mit einem Rotor (7A) der elektrischen Maschine (7) verbunden ist.

5. Hybridfahrzeuggetriebe (3) mit einer Getriebeeingangswelle (9), die über ein Schaltelement (12) mit einer Antriebsmaschine (2) verbindbar ist, und mit einer elektrischen Maschine (7), die zur Drehmomentübertragung mit der Getriebeeingangswelle (9) in Wirkverbindung bringbar ist, wobei ein weiteres Schaltelement (8) vorgesehen ist, mittels dem die elektrische Maschine (7) von der Getriebeeingangswelle (9) trennbar und mit dieser in Wirkverbindung bringbar ist, wobei die elektrische Maschine (7) in einer ersten Schaltstellung (S1) des weiteren Schaltelementes (8) von der Getriebeeingangswelle (9) getrennt ist und in einer zweiten Schaltstellung (S2) des weiteren Schaltelementes (8) mit der Getriebeeingangswelle (9) gekoppelt ist, im Bereich der schaltbaren Wirkverbindung zwischen der elektrischen Maschine (7) und der Getriebeeingangswelle (9) eine Planetengetriebeeinrichtung (15) vorgesehen ist, **dadurch gekennzeichnet, dass** ein Sonnenrad (17) der Planetengetriebeeinrichtung (15) gehäusefest ausgebildet ist, während ein Hohlrad (16) über das weitere Schaltelement (8) mit einem Rotor (7A) der elektrischen Maschine (7) verbindbar ist und ein Planetenträger (18) mit der Getriebeeingangswelle (9) gekoppelt ist.

6. Hybridfahrzeuggetriebe nach Anspruch 5, **dadurch gekennzeichnet, dass** in der zweiten Schaltstellung (S2) des weiteren Schaltelementes (8) der Rotor (7A) der elektrischen Maschine (7) mit der Getriebeeingangswelle (9) direkt verbunden ist, während der Rotor (7A) vom Hohlrad (16) der Planetengetriebeeinrichtung (15) getrennt ist.

7. Hybridfahrzeuggetriebe nach Anspruch 6, **dadurch gekennzeichnet, dass** in der dritten Schaltstellung (S3) des weiteren Schaltelementes (8) die elektrische Maschine (7) im Bereich des Rotors (7A) mit dem Hohlrad (16) der Planetengetriebeeinrichtung (15) drehfest verbunden und die direkte Verbindung zwischen dem Rotor (7A) und der Getriebeeingangswelle (9) getrennt ist.

8. Hybridfahrzeuggetriebe (3) mit einer Getriebeeingangswelle (9), die über ein Schaltelement (12) mit einer Antriebsmaschine (2) verbindbar ist, und mit einer elektrischen Maschine (7), die zur Drehmomentübertragung mit der Getriebeeingangswelle (9) in Wirkverbindung bringbar ist, wobei ein weiteres Schaltelement (8) vorgesehen ist, mittels dem die elektrische Maschine (7) von der Getriebeeingangswelle (9) trennbar und mit dieser in Wirkverbindung bringbar ist, wobei die elektrische Maschine (7) in einer ersten Schaltstellung (S1) des weiteren Schaltelementes (8) von der Getriebeeingangswelle (9) getrennt ist und in einer zweiten Schaltstellung (S2) des weiteren Schaltelementes (8) mit der Getriebeeingangswelle (9) gekoppelt ist, im Bereich der schaltbaren Wirkverbindung zwischen der elektrischen Maschine (7) und der Getriebeeingangswelle (9) eine Planetengetriebeeinrichtung (15) vorgesehen ist, **dadurch gekennzeichnet, dass** ein Hohlrad (16) der Planetengetriebeeinrichtung (15) gehäusefest ausgebildet ist, während ein Planetenträger (18) über das weitere Schaltelement (8) mit der Getriebeeingangswelle (9) verbindbar ist und ein Sonnenrad (17) mit einem Rotor (7A) der elektrischen Maschine (7) gekoppelt ist.

9. Hybridfahrzeuggetriebe nach einem der Ansprüche 1 bis 8, **dadurch gekennzeichnet, dass** das weitere Schaltelement (8) als formschlüssiges Schaltelement ausgebildet und vorzugsweise über die elektrische Maschine (7) synchronisierbar ist.

10. Hybridfahrzeuggetriebe nach einem der Ansprüche 1 bis 8, **dadurch gekennzeichnet, dass** das weitere Schaltelement (8) als reibschlüssiges Lamellenschaltelement oder als Synchronisierung ausgebildet ist.

11. Hybridfahrzeuggetriebe nach einem der Ansprüche 1 bis 10, **dadurch gekennzeichnet, dass** im Bereich der Wirkverbindung zwischen der elektrischen Maschine (7) und der Getriebeeingangswelle (9) zusätzlich eine Getriebepumpe (14) mit der Getriebeeingangswelle (9) wirkverbunden ist, womit die Getriebepumpe (14) sowohl von der Antriebsmaschine (9) als auch von der elektrischen Maschine (7) antreibbar ist.
(Weiter auf Seite 17 der ursprünglich eingereichten Unterlagen.)

## Claims

1. Hybrid vehicle transmission (3) having a transmission input shaft (9), which is connectable by way of a switching element (12) to a drive machine (2), and having an electric machine (7), which, for torque transmission, can be placed in operative connection with the transmission input shaft (9), wherein a further switching element (8) is provided by way of which the electric machine (7) can be separated from the transmission input shaft (9) and can be placed in operative connection therewith, wherein, when the further switching element (8) is in a first switching position (S1), the electric machine (7) is separated from the transmission input shaft (9) and, when the further switching element (8) is in a second switching position (S2), said electric machine is coupled to the transmission input shaft (9), a planetary gear set device (15) is provided in the region of the switchable operative connection between the electric machine (7) and the transmission input shaft (9), **characterized in that** the planetary gear set device (15) can be placed in a blocked state by way of the further switching element (8) by way of which the operative connection between the transmission input shaft (9) and the electric machine (7) can be switched.

2. Hybrid vehicle transmission according to Claim 1, **characterized in that** the planetary gear set device (15) is in a non-blocked operating state when the further switching element (8) is in the second switching position (S2).

3. Hybrid vehicle transmission according to Claim 1 or 2, **characterized in that**, when the further switching element (8) is in a third switching position (S3), the electric machine (7) is operatively connected to the transmission input shaft (9) and the planetary gear set device (15) is in the blocked operating state.

4. Hybrid vehicle transmission according to one of Claims 1 to 3, **characterized in that** an internal gear (16) of the planetary gear set device (15) can be fixed relative to a housing by way of the further switching element (8) or can be coupled to the transmission input shaft (9), whereas a planet carrier (18) is operatively connected to the transmission input shaft (9) and a sun gear (17) is connected to a rotor (7A) of the electric machine (7).

5. Hybrid vehicle transmission (3) having a transmission input shaft (9), which is connectable by way of a switching element (12) to a drive machine (2), and having an electric machine (7), which, for torque transmission, can be placed in operative connection with the transmission input shaft (9), wherein a further switching element (8) is provided by way of which the electric machine (7) can be separated from the transmission input shaft (9) and can be placed in operative connection therewith, wherein, when the further switching element (8) is in a first switching position (S1), the electric machine (7) is separated from the transmission input shaft (9) and, when the further switching element (8) is in a second switching position (S2), said electric machine is coupled to the transmission input shaft (9), a planetary gear set device (15) is provided in the region of the switchable operative connection between the electric machine (7) and the transmission input shaft (9), **characterized in that** a sun gear (17) of the planetary gear set device (15) is designed to be fixed relative to a housing, whereas an internal gear (16) is connectable by way of the further switching element (8) to a rotor (7A) of the electric machine (7) and a planet carrier (18) is coupled to the transmission input shaft (9).

6. Hybrid vehicle transmission according to Claim 5, **characterized in that**, when the further switching element (8) is in the second switching position (S2), the rotor (7A) of the electric machine (7) is directly connected to the transmission input shaft (9), whereas the rotor (7A) is separated from the internal gear (16) of the planetary gear set device (15).

7. Hybrid vehicle transmission according to Claim 6, **characterized in that**, when the further switching element (8) is in the third switching position (S3), the electric machine (7) is, in the region of the rotor (7A), connected rotationally conjointly to the internal gear (16) of the planetary gear set device (15), and the direct connection between the rotor (7A) and the transmission input shaft (9) is severed.

8. Hybrid vehicle transmission (3) having a transmission input shaft (9), which is connectable by way of a switching element (12) to a drive machine (2), and having an electric machine (7), which, for torque transmission, can be placed in operative connection with the transmission input shaft (9), wherein a further switching element (8) is provided by way of which the electric machine (7) can be separated from the transmission input shaft (9) and can be placed in operative connection therewith, wherein, when the further switching element (8) is in a first switching position (S1), the electric machine (7) is separated from the transmission input shaft (9) and, when the further switching element (8) is in a second switching position (S2), said electric machine is coupled to the transmission input shaft (9), a planetary gear set device (15) is provided in the region of the switchable operative connection between the electric machine (7) and the transmission input shaft (9), **characterized in that** an internal gear (16) of the planetary gear set device (15) is designed to be fixed relative to a housing, whereas a planet carrier (18) is connectable by way of the further switching element (8) to the transmission input shaft (9) and a sun gear (17) is coupled to a rotor (7A) of the electric machine (7).

9. Hybrid vehicle transmission according to one of Claims 1 to 8, **characterized in that** the further switching element (8) is in the form of a positively engaging switching element, and can preferably be synchronized by way of the electric machine (7).

10. Hybrid vehicle transmission according to one of Claims 1 to 8, **characterized in that** the further switching element (8) is in the form of a frictionally engaging multiplate switching element or is in the form of a synchronizing means.

11. Hybrid vehicle transmission according to one of Claims 1 to 10, **characterized in that**, in the region of the operative connection between the electric machine (7) and the transmission input shaft (9), a transmission pump (14) is additionally operatively connected to the transmission input shaft (9), whereby the transmission pump (14) can be driven both by the drive machine (9) and by the electric machine (7).

## Revendications

1. Boîte de vitesses de véhicule hybride (3) avec un arbre d'entrée de boîte de vitesses (9) pouvant être relié à une machine d'entraînement (2) via un élément de changement de vitesse (12) et avec une machine électrique (7) peut être amenée en liaison active avec l'arbre d'entrée de boîte de vitesses (9) pour la transmission du couple de rotation, un élément de changement de vitesse (8) supplémentaire étant prévu à l'aide duquel la machine électrique (7) peut être séparée de l'arbre d'entrée de boîte de vitesses (9) et être amenée en liaison active avec lui, la machine électrique (7) étant séparée de l'arbre d'entrée de boîte de vitesses (9) dans une première position de changement de vitesse (S1) de l'élément de changement de vitesse (8) supplémentaire et étant couplée avec l'arbre d'entrée de boîte de vitesses (9) dans une deuxième position de changement de vitesse (S2) de l'élément de changement de vitesse (8) supplémentaire, un dispositif d'engrenage planétaire (15) étant prévu dans la région de la liaison active connectable entre la machine électrique (7) et l'arbre d'entrée de boîte de vitesses (9), **caractérisée en ce que** le dispositif d'engrenage planétaire (15) peut être bloqué via l'élément de changement de vitesse (8) supplémentaire via lequel la liaison active peut être connectée entre l'arbre d'entrée de boîte de vitesses (9) et la machine électrique (7).

2. Boîte de vitesses de véhicule hybride selon la revendication 1, **caractérisée en ce que** le dispositif d'engrenage planétaire (15) se trouve dans l'état de fonctionnement débloqué dans la deuxième position de changement de vitesse (S2) de l'élément de changement de vitesse (8) supplémentaire.

3. Boîte de vitesses de véhicule hybride selon la revendication 1 ou 2, **caractérisée en ce que** la machine électrique (7) est reliée de façon active avec l'arbre d'entrée de boîte de vitesses (9) dans la troisième position de changement de vitesse (S3) de l'élément de changement de vitesse (8) supplémentaire et que le dispositif d'engrenage planétaire (15) se trouve dans l'état de fonctionnement bloqué.

4. Boîte de vitesses de véhicule hybride selon l'une quelconque des revendications 1 à 3, **caractérisée en ce qu'**une roue creuse (16) du dispositif d'engrenage planétaire (15) peut être représentée fixement par rapport au carter via l'élément de changement de vitesse (8) supplémentaire ou peut être couplée avec l'arbre d'entrée de boîte de vitesses (9) pendant qu'un support planétaire (18) est relié activement avec l'arbre d'entrée de boîte de vitesses (9) et qu'une roue solaire (17) est reliée à un rotor (7A) de la machine électrique (7).

5. Boîte de vitesses de véhicule hybride (3) avec un arbre d'entrée de boîte de vitesses (9) pouvant être relié à une machine d'entraînement (2) via un élément de changement de vitesse (12) et avec une machine électrique (7) pouvant être amenée en liaison active avec l'arbre d'entrée de boîte de vitesses (9) pour la transmission du couple de rotation, un élément de changement de vitesse (8) supplémentaire étant prévu à l'aide duquel la machine électrique (7) peut être séparée de l'arbre d'entrée de boîte de vitesses (9) et être amenée en liaison active avec lui, la machine électrique (7) étant séparée de l'arbre d'entrée de boîte de vitesses (9) dans une première position de changement de vitesse (S1) de l'élément de changement de vitesse (8) supplémentaire et étant couplée avec l'arbre d'entrée de boîte de vitesses (9) dans une deuxième position de changement de vitesse (S2) de l'élément de changement de vitesse (8) supplémentaire, un dispositif d'engrenage planétaire (15) étant prévu dans la région de la liaison active connectable entre la machine électrique (7) et l'arbre d'entrée de boîte de vitesses (9), **caractérisée en ce qu'**une roue solaire (17) du dispositif d'engrenage planétaire (15) est réalisée fixement par rapport au carter tandis qu'une roue creuse (16) peut être reliée avec un rotor (7A) de la machine électrique (7) via l'élément de changement de vitesse (8) supplémentaire et qu'un support planétaire (18) est couplé avec l'arbre d'entrée de boîte de vitesses (9).

6. Boîte de vitesses de véhicule hybride selon la revendication 5, **caractérisée en ce que** le rotor (7A) de la machine électrique (7) est directement relié avec l'arbre d'entrée de boîte de vitesses (9) dans la deuxième position de changement de vitesse (S2) de l'élément de changement de vitesse (8) supplémentaire tandis que le rotor (7A) est séparé de la roue creuse (16) du dispositif d'engrenage planétaire (15).

7. Boîte de vitesses de véhicule hybride selon la revendication 6, **caractérisée en ce que** dans la troisième position de changement de vitesse (S3) de l'élément de changement de vitesse (8) supplémentaire, la machine électrique (7) est reliée solidairement en rotation avec la roue creuse (16) du dispositif d'engrenage planétaire (15) dans la région du rotor (7A) et que la liaison directe entre le rotor (7A) et l'arbre d'entrée de boîte de vitesses (9) est séparée.

8. Boîte de vitesses de véhicule hybride (3) avec un arbre d'entrée de boîte de vitesses (9) pouvant être relié à une machine d'entraînement (2) via un élément de changement de vitesse (12) et avec une machine électrique (7) pouvant être amenée en liaison active avec l'arbre d'entrée de boîte de vitesses (9) pour la transmission du couple de rotation, un élément de changement de vitesse (8) supplémentaire étant prévu à l'aide duquel la machine électrique (7) peut être séparée de l'arbre d'entrée de boîte de vitesses (9) et être amenée en liaison active avec lui, la machine électrique (7) étant séparée de l'arbre d'entrée de boîte de vitesses (9) dans une première position de changement de vitesse (S1) de l'élément de changement de vitesse (8) supplémentaire et étant couplée avec l'arbre d'entrée de boîte de vitesses (9) dans une deuxième position de changement de vitesse (S2) de l'élément de changement de vitesse (8) supplémentaire, un dispositif d'engrenage planétaire (15) étant prévu dans la région de la liaison active connectable entre la machine électrique (7) et l'arbre d'entrée de boîte de vitesses (9), **caractérisée en ce qu'**une roue creuse (16) du dispositif d'engrenage planétaire (15) est réalisée fixement par rapport au carter tandis qu'un support planétaire (18) peut être relié avec l'arbre d'entrée de boîte de vitesses (9) via l'élément de changement de vitesse (8) supplémentaire et qu'une roue solaire (17) est couplée avec un rotor (7A) de la machine électrique (7).

9. Boîte de vitesses de véhicule hybride selon l'une quelconque des revendications 1 à 8, **caractérisée en ce que** l'élément de changement de vitesse (8) supplémentaire est réalisé sous la forme d'un élément de changement de vitesse réalisé par complémentarité de formes et peut de préférence être synchronisé via la machine électrique (7).

10. Boîte de vitesses de véhicule hybride selon l'une quelconque des revendications 1 à 8, **caractérisée en ce que** l'élément de changement de vitesse (8) supplémentaire est réalisé sous la forme d'un élément de changement de vitesse à lamelles réalisé par complémentarité de frottements ou d'une synchronisation.

11. Boîte de vitesses de véhicule hybride selon l'une quelconque des revendications 1 à 10, **caractérisée en ce qu'**une pompe de boîte de vitesses (14) est en outre reliée de façon active avec l'arbre d'entrée de boîte de vitesses (9) dans la région de la liaison active entre la machine électrique (7) et l'arbre d'entrée de boîte de vitesses (9), la pompe de boîte de vitesses (14) étant ainsi entraînée tant par la machine d'entraînement (9) que par la machine électrique (7).
